# EUROPEAN PATENT APPLICATION

(11) **EP 2 037 548 A2**
(43) Date of publication of application: **18.03.2009**
(21) Application number: 08015640.9
(22) Date of filing: 19.08.1998
(51) Int. Cl.: H01S 3/067

(54) **Fiber light source with desired output spectrum**

(30) Priority: 14.07.1998 KR 19980028259
(62) Divisional of application: 98941880.1
(71) Applicant: NOVERA OPTICS, INC., San Jose California 95131 (US)
(72) Inventor: Kim, Byoung, Yoon, Taejon 305-335 (KR); Yun, Seok, Hyun, Taejon 305-333 (KR); Kim, Hyo Sang, Taejon 305-701 (KR)
(74) Representative: Samson & Partner

(57) **Abstract**

This invention relates to a fiber light source which operates without external input light, producing spectrum-sliced output light from amplified spontaneous emission.

## Description

### TECHNICAL FIELD

The present invention relates to a light source, more specifically to a fiber light source capable of obtaining spectrum-sliced output light for the use of WDM (Wavelength Division Multiplexed) optical communication systems.

### BACKGROUND ART

Gain-flattening of optical amplifiers has been a hot topic of research since it is directly related to the transmission capacity of WDM optical communication systems. In the prior art, passive wavelength filters with fixed loss curves have been used for the gain-flattening of optical amplifiers.

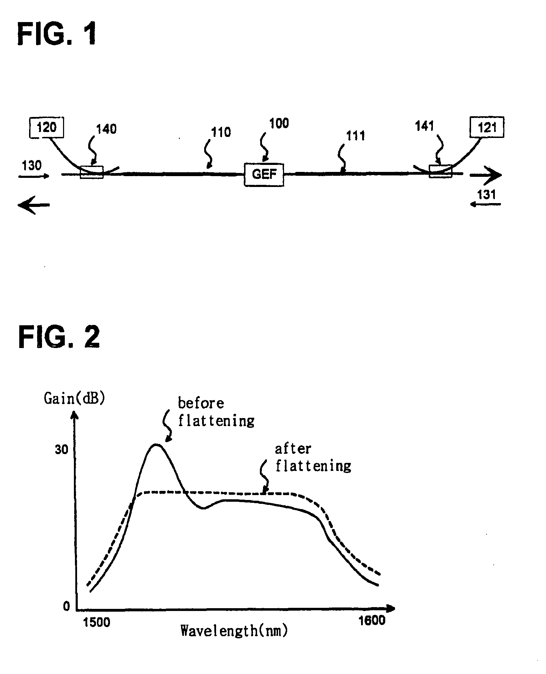

FIG. 1 shows a schematic of a dual-stage EDFA (Erbium Doped Fiber Amplifier) employing a passive gain-flattening filter according to the prior art. Referring to FIG. 1, a passive gain-flattening wavelength filter 100 is inserted between the first EDF (Erbium Doped Fiber) 110 and the second EDF 111. Fiber gratings or thin-film filters are generally used as passive gain-flattening filter 100. The length, doping concentration or the like of the respective EDFs as well as the pumping direction or power of the pumping lights 120 and 121 may differ depending on the situations. In FIG. 1, optical signals 130 and 131 enter the EDFA bidirectionally, but occasionally optical signals may unidirectionally enter the EDFA. In this EDFA, optical signals are amplified in the first and second EDFs 110 and 111 after passing through WDM couplers 140 and 141. The dual-stage EDFA shown in FIG. 1 provides superior gain and noise characteristics to a single-stage EDFA in spite of the optical loss resulting from wavelength filter 100. When the optical signal is unidirectionally input to the dual-stage EDFA, an additional optical isolator may be provided beside wavelength filter 100 to suppress backward spontaneous emission.

The gain variation of a conventional EDFA is more than a few dB in the wavelength region of interest, typically over 30 nm around 1550 nm. FIG. 2 schematically shows the gain profiles across the 1500 - 1600 nm region of the spectrum before and after the gain flattening using an appropriate wavelength filter. Gain-flattening is very important for the WDM optical communication systems. However, when the operating conditions of the optical amplifier such as input signal power, gain, pumping power, temperature and the like are changed, flat gain profile can not be obtained since the gain characteristics of the EDF varies. Such changes in the operating conditions may arise from the reconfiguration or degradation of the optical communication networks. Therefore, to realize stable and flexible WDM optical communication systems, intelligent optical amplifiers are needed which can actively cope with various changes in operating conditions.

The optical amplifier utilizing Raman nonlinear effect in an optical fiber has widely been studied along with the EDFA. The basic configuration of the Raman optical amplifier is similar to that of the EDFA shown in FIG. 1 but it employs a telecommunication grade fiber, a special fiber with a numerical aperture ("NA") giving high Raman efficiency or a phosphosilicate based fiber with large Raman wavelength shift. The Raman optical amplifier is pumped by a high power laser having more than a few hundred mW pump power and a wavelength that is determined by the specific Raman wavelength shift of the fiber used. The wavelength range of the Raman gain curve is about 100 nm wider than that of a common EDF but the gain variation is too large for the use of the WDM optical communication systems. Therefore, even in the case of the Raman optical amplifier, intelligent optical amplifiers are needed which can actively cope with various changes in operating conditions to achieve gain-flattening.

The document EP 0 713 273 A2 describes an optical fiber amplifier which comprises a pre-amp 2 and a post-amp 3, which are connected in series, a photocoupler 4, a long wave pass filter (LWPF) 5 and an LWPF controller 6. The LWPF 5 is put on between the pre-amp 2 and the post-amp 3, and its cutoff wavelength can be adjustable. The LWPF controller 6 detects an input signal power of the input light signal and adjusts the cutoff wavelength of the LWPF 5 based on the detected input signal power. Gain of light signals which are output from the post-amp 3 are equalized ranging the extensive input signal power and covering wide signal-wavelengths bands.

### DISCLOSURE OF THE INVENTION

It is therefore an object of the present invention to provide a fiber light source that can obtain the desired spectral line shape through the dynamic filter response to the various changes in operating conditions.

In order to achieve the object, the fiber light source according to the present invention comprises a length of gain optical fiber, optical pump means for generating spontaneous emission by inducing population inversion in the gain optical fiber, at least one wavelength tunable filter and filter driving means. Preferably, the wavelength tunable filter is an all-fiber acousto-optic wavelength filter based on coupling between spatial modes in optical fibers.

In an embodiment of the fiber light source, a Fabry-Perot filter is used to obtain a wavelength sliced output spectrum.

### BRIEF DESCRIPTION OF THE DRAWINGS

FIG. 1 shows a schematic of a dual-stage EDFA employing a passive gain flattening filter according to the prior art;
FIG. 2 is a graph schematically showing gain profiles of a conventional EDFA before and after the gain flattening using an appropriate wavelength filter;
FIG. 3 shows the configuration of the optical fiber acousto-optic wavelength tunable filter commonly used in an optical amplifier and the fiber light source according to the present invention;
FIG. 4 shows the configuration of the unidirectional dual-stage optical amplifier;
FIGS. 5A and 5B show gain curves before and after the gain flattening for different powers of saturating signal of -13 dBm and -7 dBm, respectively;
FIGS. 6A and 6B show the loss curves of the wavelength tunable filter for two different saturation powers of -13 dBm and -7 dBm, respectively;
FIG. 7A is a graph showing flattened gain curves at various operating gain levels of an optical amplifier, which is obtained by adjusting the filter;
FIG. 7B is a graph showing gain tilt produced when the filter is not adjusted;
FIG. 8 shows the configuration of another optical amplifier;
FIG. 9 shows the configuration of an active and intelligent optical amplifier;
FIG. 10 shows the configuration of a fiber light source according to the present invention; and
FIG. 11 is a graph showing a representative spectrum of the spectrum-sliced optical output generated from the fiber light source of the invention.

### BEST MODE FOR CARRYING OUT THE INVENTION

The present invention will now be described in detail referring to the accompanying drawings. However, the embodiments hereinafter described should be interpreted as illustrative and in no sense limiting.

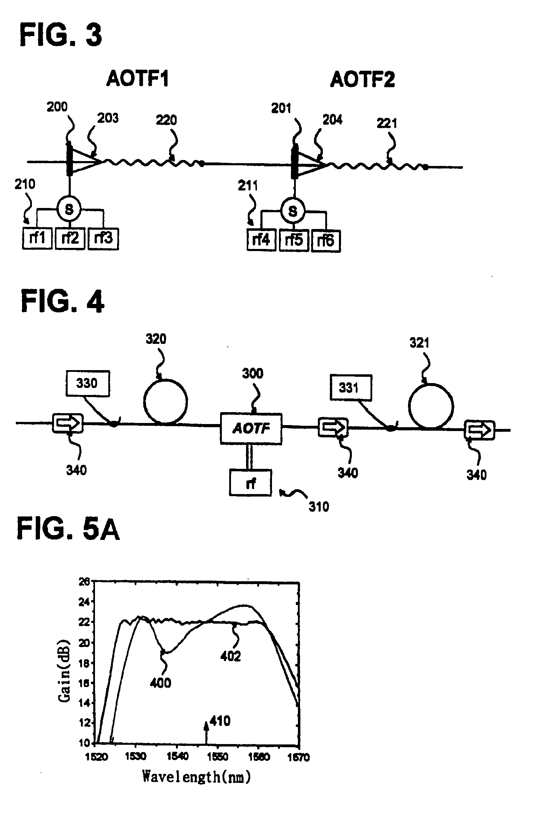

Referring to FIG. 3, the wavelength tunable filter for the gain flattening is composed of two devices AOTF1 and AOTF2 connected in series. Acoustic wave generators are composed of piezoelectric devices 200 and 201 and acoustic horns 203 and 204. The Acoustic wave generators are driven by the alternating electrical signals from filter drivers 210 and 211.

The generated acoustic wave propagates along single mode optical fibers 220 and 221. When the wavelength of the acoustic wave coincides with the beat length between modes, mode-coupling is induced.

The first device AOTF1 employs a telecommunication grade single mode fiber (NA = 0.11, core diameter = 9.2 µm, cladding diameter = 125 µm). The acoustic wave propagates along the length of 15 cm in the single mode fiber. Mode-coupling to the respective cladding modes (LP12, LP13, LP14) was achieved by applying three electrical signals generated from signals generators rf1, rf2 and rf3 to piezoelectric device 200. The half width half maximum of this filter was 3.3, 4.1 and 4.9 nm, respectively.

The second device AOTF2 employs a single mode fiber with the cut-off wavelength of about 1 µm (NA = 0.12, core diameter = 7.0 µm, cladding diameter = 100 µm). The fiber length for inducing mode-coupling was 5 cm. Mode-coupling to the respective cladding modes (LP11, LP12, LP13) was achieved by applying three electrical signals generated from singal generators rf4, rf5 and rf6 to piezoelectric device 201. The half width half maximum of this filter was 8.0, 8.6 and 14.5 nm, respectively.

The maximum response speed mainly depends on the length of the optical fiber. In the case of two devices AOTF1 and AOTF2, they were 95 µs and 25 µs, respectively. The first device AOTF1 with narrow linewidth was used in flattening the gain over the 1530 nm range, whereas the second device AOTF2 with broad linewidth was used in flattening the gain over the 1555 nm range. The basic optical loss of two devices due to the connection of optical fibers was less than 0.5 dB.

FIG. 4 shows the configuration of the unidirectional dual-stage optical amplifier employing gain-flattening wavelength tunable filter 300 and signal generator 310 described in FIG. 3. Optical fibers 320 and 321 doped with erbium of about 300 ppm concentration exhibit about 2.5 dB/m absorption at 1530 nm, respectively. The first stage optical fiber 320 (length : 10 m) was pumped with 980 nm laser diode 330 to enhance the noise characteristics. When -10 dBm optical signal was pumped with 20 mW power at 1550 nm, more than 10 dB gain as well as more than 4 dB noise figure were achieved. The second stage optical fiber 321 (length : 24 m) was pumped with 1480 nm laser diode 331. Furthermore, an optical isolator 340 was used to suppress the backward spontaneous emission and the effect of reflected signals. The two optical fibers have different physical property since at least one parameter of the optical fibers such as core radius, material, doping concentration or length is different from each other. Instead of erbium doped optical fibers 320 and 321, optical fibers obtaining optical gain from Raman nonlinear effect or semiconductor optical amplifying media may be used.

A 1547.4 nm DFB (Distributed FeedBack) laser output and LED (Light Emitting Diode) output were input to the above optical amplifier as a saturating signal and a probe light, respectively. Then, the gain and noise figure were measured by detecting the respective intensities of amplified LED light and spontaneous emission using a wavelength analyzer. In the first embodiment, the input probe light power was -7 dBm over the range 1520 nm to 1570 nm, which was adjusted to be higher than that of spontaneous emission by more than 3 dB as well as much lower than that (-13 ∼ -7 dBm) of the DFB light for the reduction of measurement error.

FIG. 5A shows the gain curves before and after the gain flattening when the saturating signal (DFB light) power is -13 dBm. The gain curve 400 before the gain flattening was obtained when electrical signals are not applied to the filter. On the other hand, the gain curve 402 after the gain flattening was obtained by adjusting the loss curve of the filter to minimize the gain variation. Referring to FIG. 5A, the gain after the gain flattening approaches a constant value (22 dB) over the 35 nm range between 1528 nm and 1563 nm. The arrow 410 represents the wavelength of the saturating signal.

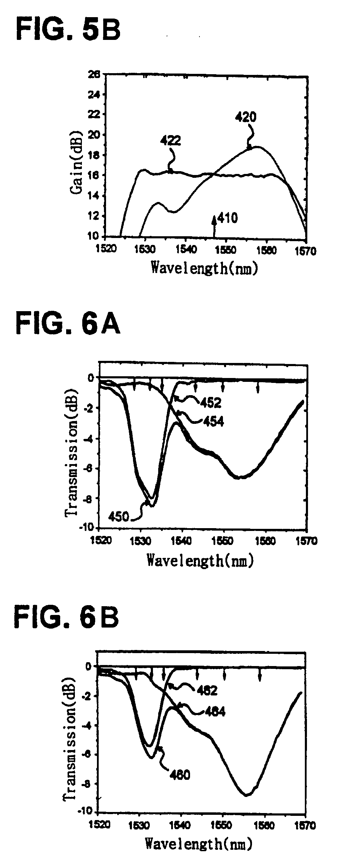

FIG. 5B shows the gain curves 420 and 422 before and after the gain flattening when the saturating signal power is -7 dBm. 16 dB flat gain was obtained by adjusting the loss curve of the filter.

FIGS. 6A and 6B show the loss curves of the wavelength tunable filter for two different saturation powers of -13 dBm and -7 dBm, respectively. The wavelength tunable filter is used for an optical amplifier. The loss curves 452 and 454 produced by the first and second devices AOTF1, AOTF2 of FIG. 3 were combined to form a total loss curve 450 in log scale. Likewise, the total curve 460 was formed from the loss curves 462 and 464. As described above, the first and second devices AOTF1 and AOTF2 were used in flattening the gain over the 1530 nm and 1555 nm ranges, respectively. The six arrows indicate the center wavelengths of the notches produced by six alternating electrical signals. In the case of FIG. 6A, the frequency and voltage of applied electrical signals were 2.0076 MHz; 10.04 V, 2.4015 MHz; 9.96 V, 2.9942 MHz; 23.2 V, 1.0277 MHz; 15 V, 1.5453 MHz; 9 V and 2.3357 MHz; 17.2 V, when measured with the output impedance of 50 Ω. In the case of FIG. 6B, they were 2.0078 MHz; 4.74 V, 2.3989 MHz; 7.58 V, 2.9938 MHz; 14.02 V, 1.0348 MHz; 20.02 V, 1.5391 MHz; 13.2 V and 2.3375 MHz; 15.8 V. If the efficiency of the acoustic wave generator is enhanced and an optical fiber having smaller diameter is employed, the drive voltage can be lowered less than 1 V.

The active optical amplifier can be used to obtain a desired gain curve under various operating conditions unlike the conventional passive optical amplifier. The advantage of the active optical amplifier could be validated through the following experiment. In the experiment, the loss curve of the filter as well as the pumping power for the second stage optical fiber were adjusted to obtain 19 dBm flat gain when the saturating signal power was 10 dBm.

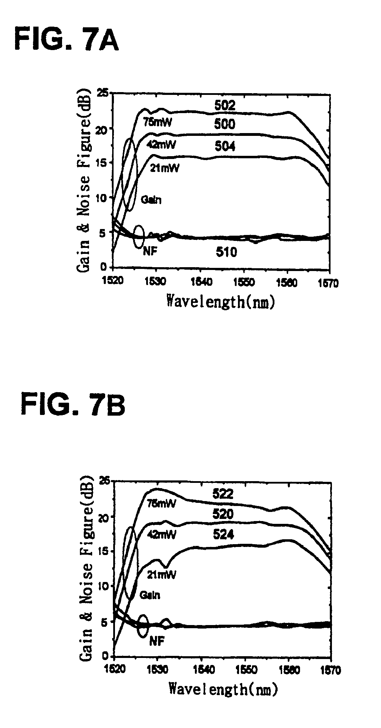

FIG. 7A shows flattened gain curves at various operating gain levels of the optical, which is obtained by adjusting the filter. On the contrary, FIG. 7B shows gain tilt produced when the filter is not adjusted.

Referring to FIG. 7A, the curve 500 is a flattened gain curve for the pumping power of 42 mW. In general, pumping power and filter profile should be readjusted to change the gain of an optical amplifier. The curves 502 and 504 are flattened gain curves obtained when the pumping powers are changed to 75 mW and 21 mW and filter profiles are adjusted to reach the gain levels of 22.5 dB and 16 dB, respectively. The noise figures 510 are less than 5 dB over the 35 nm range between 1528 nm and 1563 nm.

The optical amplifier employing this filter with actively tunable loss curve can produce flattened gain profiles at various gain levels. However, the optical amplifier employing the conventional passive wavelength filter can no more produce flattened gain profiles for the adjustment of gain levels since it is designed to produce flattened gain profiles at a specific gain level.

FIG. 7B shows the experimental result to demonstrate this problem. In the experiment, the filter was adjusted to obtain flattened 19 dB gain at the pumping power of 42 mW. Then, the pumping power was increased up to 75 mW without changing the loss curve of the filter. In this case, the gain 522 increased on the whole, but a gain variation of 3 dB was observed over the 35 nm range. When the pumping power was decreased to 21 mW, the gain 524 decreased with a gain variation of about 4 dB. Such gain tilts were expected to be a problem of the optical amplifier employing passive wavelength filters, exhibiting the limitation of the conventional optical amplifier applications.

On the other hand, a gain detection system that can determine whether the measured gain curve coincides with a desired gain profile is required to realize a self-adjusting optical amplifier in spite of the changes in operating conditions.

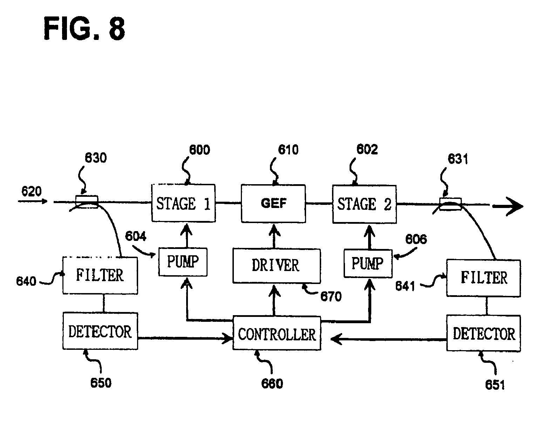

FIG. 8 shows the configuration of an optical amplifier, which employs an optical gain detection system. The gain detection system can detect the gain of the optical amplifier by comparing the spectrum of input light to that of output light. Referring to FIG. 8, the first and second stage amplifiers are composed of pumping lasers 604 and 606, WDM couplers, and erbium doped optical fibers 600 and 602. An active wavelength tunable filter 610 having a desired loss curve is disposed between optical fibers 600 and 602. Along with active wavelength tunable filter 610, a passive wavelength filter having a specific loss curve may be used for a variety of purposes.

The operation of the gain detection system is as follows.

Some part of incoming multi-wavelength optical signals 620 are input to a wavelength filter 640 such as a rotatable diffraction grating and a Fabry-Perot filter by a fiber coupler 630. The fiber coupler 630 has a low wavelength dependence as well as low coupling ratios of less than a few percents. Then, an optical detector 650 measures the optical signal intensity as a function of wavelength while the wavelength filter 640 is tuned.

The optical signals amplified at the first and second stage amplifiers are transmitted through a fiber coupler 631 and a wavelength filter 641 to an optical detector 651 for the detection of signal intensities as a function of wavelength. The fiber coupler 631 also has a low wavelength dependence as well as low coupling ratios of about a few percents. The gain curve is obtained by comparing the measured input and output signal intensities. From the comparison of the gain curve with a desired gain curve, a controller 660 calculates the required pumping power and filter profiles. The respective pumping lasers 604, 606 and filter driver 670 are controlled according to the calculation results. Through such a feedback of the controller 660, an active and intelligent optical amplifier, capable of obtaining a desired gain curve in spite of changes in external conditions, with a response time less than 1 ms can be realized.

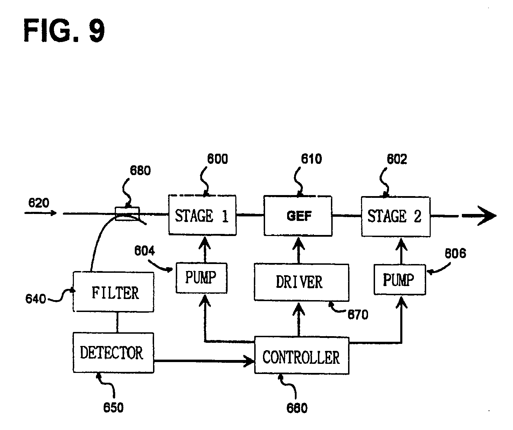

FIG. 9 shows the configuration of an active and intelligent optical amplifier, which employs an optical gain detection system different from the optical gain detection system described in FIG. 8. This configuration is basically similar to that of FIG. 8, however, there is a difference in obtaining the gain curve of the optical amplifier. Referring to FIG. 9, the spectrum of the backward spontaneous emission is obtained after transmitting an optical coupler 680 at the input port and a wavelength filter 640 to an optical detector 650. The gain curve of the optical amplifier can be obtained from the spectrum and a well-known amplifier modelling formula. Then, a controller 660 calculates the required pumping power and filter profiles from the comparison of the gain curve with a desired gain curve. The respective pumping lasers 604, 606 and filter driver 670 are controlled according to the calculation results, as was described in FIG. 8.

Further, the gain detection system of FIG. 8 or FIG. 9 may include a thermometer capable of detecting the temperature inside the optical amplifier. If the temperature change is compensated in spite of the temperature dependence of the gain curve of the erbium doped optical fiber or the wavelength tunable filter, the total gain curve of the optical amplifier can have a desired shape.

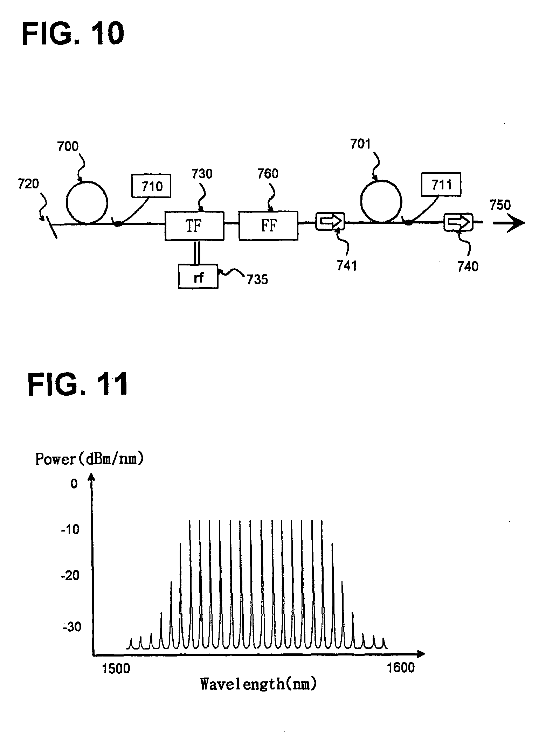

FIG. 10 shows the configuration of a fiber light source according to the present invention. The configuration of the fiber light source is similar to those of the above-described optical fibers.

However, the difference is that the fiber light source can actively produce optical output spectra using the amplified spontaneous emission generated from a pumped gain optical fiber without external input optical signals. In the case of employing an erbium doped optical fiber, an output spectrum can be obtained with a broadband of more than 30 nm at 1550 nm center wavelength. Referring to FIG. 10, the gain optical fiber is divided into two parts, similar to the above-described dual-stage optical amplifier. The first stage optical fiber 700 and the second stage optical fiber 701 are pumped contra-directionally by optical pumping means 710 and 711 to increase the optical power. The one end 720 of the first stage optical fiber 700 is cut at angles to reduce reflectance, and the other end of the first stage optical fiber 700 connected to the one end of the second stage optical fiber 701 through a wavelength tunable filter 730. The other end of the second stage optical fiber 701 is connected to an optical isolator 740 to avoid the optical feedback from the outside. Along with wavelength tunable filter 730, a mid-stage optical isolator 741 is installed to remove the backward amplified spontaneous emission travelling from the first stage to the second stage, enhancing the power of the forward optical output 750. If necessary, an additional fixed wavelength filter 760 can be installed to obtain a variety of output spectra. For example, if a Fabry-Perot filter having a free spectral range of 0.8 nm or 1.6 nm and a finesse of more than 10 is used as fixed wavelength filter 760, spectrum-sliced output light, adequate for the light source of WDM optical communication systems, can be obtained. Moreover, the desired optical power for each wavelength channel of the spectrum-sliced output spectrum can be obtained by adjusting a filter driver 735. For example, if the optical loss or gain in interconnected communication systems is different for each channel, signal to noise characteristics for each channel can be optimized by adjusting the optical power for each channel of the light source. That is, higher optical power is supplied for a channel of high optical loss and lower optical power for a channel of low optical loss, respectively.

FIG. 11 is a graph showing a representative spectrum of the spectrum-sliced optical output generated from the fiber light source of the invention. Referring to FIG. 11, the optical power for each channel is flattened over a few tens of nanometer wavelength range.

The above-described active optical amplifier provides a variety of gain curves in various driving conditions of WDM optical communication systems. For example, a constant gain level can be obtained in spite of changes in surrounding temperature, spectrumhole-burning effect resulted from the change in optical input power or the like. Also, the gain flatness can be maintained even when the gain level is varied by the reconfiguration of the optical communication networks. In the case of an optical transmission line including a plurality of amplifiers, the active optical amplifiers may be used for all amplifiers. Otherwise, the active optical amplifier may be used between every a few passive optical amplifiers. Moreover, it may be used as a front-stage amplifier between a light source and an optical transmission line when the optical transmission line shows wavelength dependent irregular optical loss or gain. In this case, signal to noise characteristics for each wavelength can be optimized by adjusting the optical power of the light, which is input to the optical transmission line, for each wavelength at the front-stage amplifier. That is, low power light is input to the optical transmission line for the wavelength showing great optical loss therein. On the contrary, high power light is input to the optical transmission line for the wavelength showing small optical loss therein.

The fiber light source according to the present invention can produce desired output spectrum since it actively copes with the changes in external conditions. Therefore, it can be used in the applications of a fiber-optic gyroscope, a white-light interferometer or characteristics analysis on the devices used in WDM optical communication systems.

Moreover, the spectrum-sliced light source with a periodic transmittance can be used as a light source of WDM optical communication systems. In this case, the wavelength dependent optical loss in the optical transmission line is compensated by controlling the optical power of each wavelength channel to a desired state to yield optimal signal to noise ratio.

## Claims

1. A fiber light source, comprising:
a length of gain optical fiber (700) doped with a gain constituent,
optical pump means (710) optically coupled to said gain optical fiber (700) for generating spontaneous emission by inducing population inversion in the gain optical fiber (700);
at least one wavelength tunable filter (730) placed at, at least, one position of said gain optical fiber (700), each having a loss profile as a function of optical wavelength;
filter driving means (735) for applying electrical signals to each wavelength tunable filter (730) in order to control each loss profile of the tunable filter;
wherein the spectrum of the amplified spontaneous emission generated in said gain optical fiber (700) has a desired shape at the output port of the fiber light source.

2. The fiber light source of claim 1, further comprising at least one fixed wavelength filter (760) at, at least, one position of said gain optical fiber.

3. The fiber light source of claim 2, wherein said fixed wavelength filter (760) is a Fabry-Perot filter, the free spectral range of said Fabry-Perot filter being narrower than the full width half maximum of the amplified spontaneous emission so that the output light may have an evenly spaced wavelength-sliced spectral shape.

4. The fiber light source of claim 3, wherein said free spectral range has any value selected from 0.4 nm, 0.8 nm or 1.6 nm.
